# EUROPEAN PATENT APPLICATION

(11) **EP 1 437 166 A1**
(43) Date of publication of application: **14.07.2004**
(21) Application number: 03075467.5
(22) Date of filing: 11.02.2003
(51) Int. Cl.: B01D 27/00, B01D 27/08, B01D 27/14, B01D 29/05, B01D 29/15, B01D 35/30

(54) **Mainstream replacement filter and method**

(30) Priority: 09.01.2003 EP 03075122
(71) Applicant: NTZ Nederland BV, 3047 BP Rotterdam (NL)
(72) Inventor: Schaerlaeckens, Wilhelmus Petrus Maria, 3140 AA Maassluis (NL); Nieuwland, Pierre Gerard, 3140 AA Maassluis (NL)

(57) **Abstract**

Filter element (8), for incorporation in a filter device located in an oil stream, in particular the main stream of a machine such as an engine or a transmission, the device comprising a housing (21, 21L) forming an oil chamber in which the filter is incorporated, an oil inlet opening (5) and an oil outlet opening (6), and the filter separating the housing (21, 21L) chamber into a chamber part (15) radial exterior to the filter, and a chamber part (16) radial interior to the filter (8), characterised in that communicating means are provided enabling the communication between the radial exterior chamber part (15) with the radial interior chamber part (16), towards a venturi arrangement (29) incorporated within the interior chamber (16) of the filter (8), the venturi arrangement being near its narrowest part being provided with an opening communicating with said interior chamber (16).

## Description

The present invention relates to a method and ultra high efficiency micro filter as defined in the preamble of claim 1.

Such filters are generally known in the art, e.g. from the international patent publication publication PCT/NL00/00530 in the name of Applicant. Such filters have many advantages as are a.o. described in Applicants non- pre-published earlier patent application of Januari 9 which is hereby regarded included, and in SAE paper 2001-01-0867 "Automatic transmission hydraulic system cleanliness - the effects of operating conditions, measurement techniques and high efficiency filters", which document is hereby also regarded included

Such filter elements however, have for a disadvantage that they cannot be used as a replacement filter in may automotive applications. Rather, they are mainly applied in a so called by pass configuration. Reason for this is that the so-called micro-filters have a so-called in-depth functioning in which within the filtering material, filtering takes place on the basis of electrostatic forces. Therefore the layer of filtering material, according to the current invention preferably cellulose based fibres, is relatively thick and requires a relatively high operating pressure fall over the filter, e.g. about half a Bar. Conventional filters on the other hand, i.e. filters that solely based on the principle of blocking particles by a screen having the smallest possible openings therein, operate superficial, and therefore require a relatively low pressure drop over such filter, e.g. of only a tenth of a Bar. They are therefore commonly used as mainstream filters in automotive applications. Where full flow filters filter all of the oil passing through such main stream, micro filters have a much smaller flow due to a relatively large pressure drop, however, due to their efficiency appear over an initially delayed period of time to be much more effective than such conventional filters.

It is now an object of the current invention to modify the currently known micro filters such that they can be used in a mainstream application with undue effort and cost, and thus to make micro-filter elements available to a wide public.

According to the invention such can be realised when the features according to the characterising portion of claim 1 are applied. With such a filter device, within the relatively small space of an existing filter housing, a micro filter may be applied. By the presence of a venturi arrangement within the central chamber of the micro filter element, it is realised that the major part of the oil passing the filter housing passes through said venturi arrangement. By this fact the required under pressure is created within the central chamber, which communicates with the venturi arrangement at its smallest diameter. Through this circumstance a required pressure drop is realised over the micro filter device, causing the remainder and minor part of the oil flow to pass through the filter.

The venturi arrangement is favourably created within the central room of the micro filter, so that it may not only be located within a mainstream oil passage, but it may in principle also replace a conventional filter without changing the existing filter housing. This is due to the manner in which the venturi arrangement is designed within said chamber. Moreover, the device realising the venturi arrangement is favourably made from a synthetic material, so that it does not hamper distribution of the filter due to its weight. In a favoured embodiment the venturi arrangement consists of two connected conically shaped parts, one of which is near an axial end hooked up or otherwise is integral with and end face closure element for the micro filter, while the other longitudinal end of the venturi device may be tightened to the other end face closure element, preferably by a screw connection.

The invention will now be elucidated further along a drawing in which:
Figure 1 is a schematic representation of a first embodiment according to the invention;
Figure 2 in a sectional view provides a representation of a second embodiment according to the invention, where the micro-filter is the sole filtering element, and thereby capable of replacing a mainstream filter within an otherwise existing filter housing.

In the figures, identical reference numbers relate to identical or at least comparable technical features.

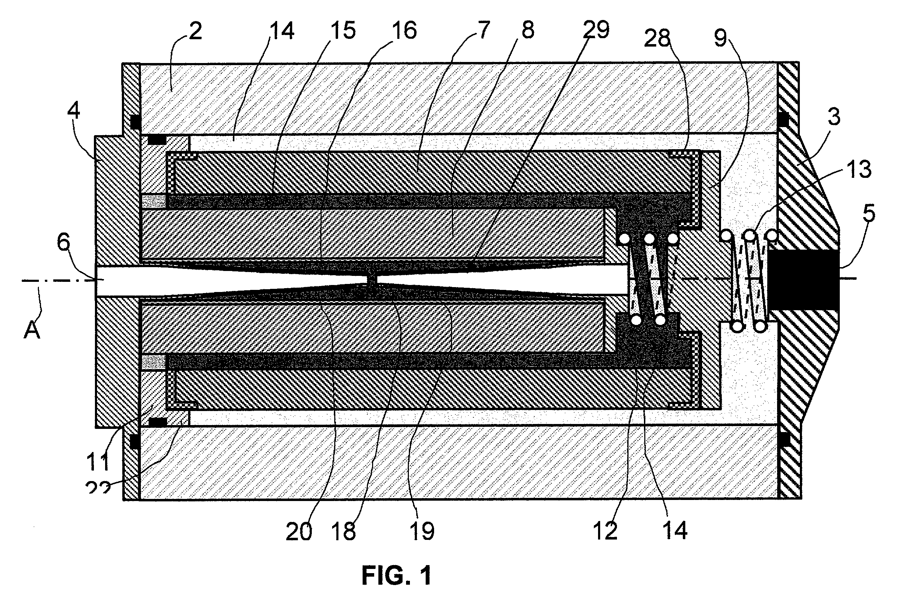

Figure 1 shows a filter device 1 comprising a cylindrical device housing 2, having axial end closure parts 3 and 4. The housing 2 comprises an oil inlet opening 5 and an oil outlet opening 6, which in the present example are both located aligned with the geometrical device axis A. Within the housing 2 there is comprised a full flow filter element 7 and a by pass filter element 8. The axial ends of these elements are closed by the end closure part 4. In the current embodiment an insert 11 is comprised between the filter element 7 and the housing part 4, so as to adapt for a specific length of the filter 7, and/or to accommodate for a radial positioning means via the presence of an edge 22. In this part also an O-ring is comprised for sealing against leakage of oil.

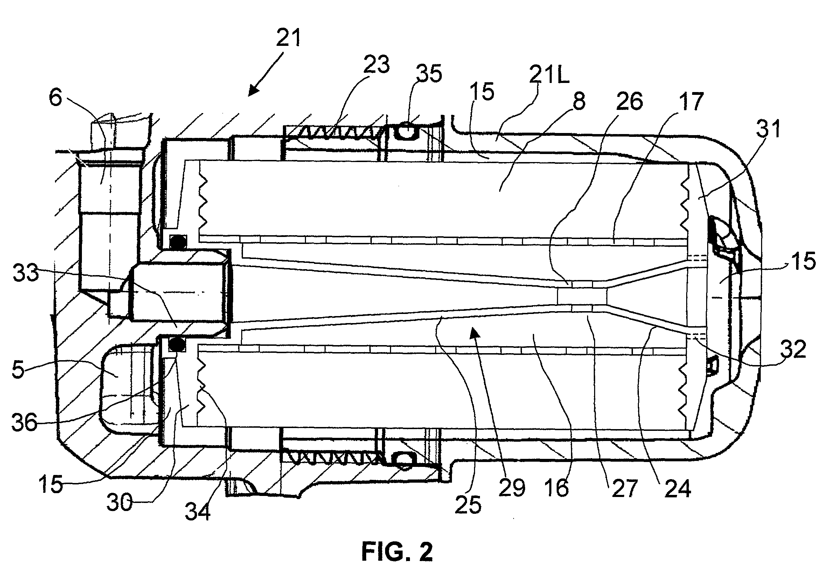

The other axial end of each of the filters 7 and 8, i.e. at the side of inlet opening 5 is closed via separate end closure elements 9 and 12 respectively. The closure elements 12 is firmly pressed against the axial end of the micro filter by the presence of a spring loaded means 13 and 14 present between housing part 3 and closure element 9, and between closure element 9 and closure element 12 respectively. The conventional, i.e. surface filtering based filter 7 has end faces 28, probably for supporting a folded layer structure of this type of filter, which end parts 28 are fixed to a positioning member 9 by means of an in between, originally fluid agent such as glue, thereby preventing leakage of oil from oil passage 14 to chamber 15. Although not shown, the end face closing elements 4 and 12 for filter 8 are provided with a so called labyrinth profile as depicted in figure 2, composed by e.g. circumferential rings 34 of a generally triangular shape in cross section, on said faces 4, 12 and protruding into the material of the micro filter. The micro filter 8 is composed of a cellulose fibre material incorporated around a perforated central core 17. By this structure it has axial end faces which are open for passage of oil. For preventing such the filter 8 is incorporated between end closure elements which are firmly pressed against the end faces.

The generally cylindrically shaped filter element 8 is a micro filter and is here arranged in a by-pass configuration. It is located within the interior space of the generally cylindrically shaped full flow, i.e. superficially operating filter element 7. The inner wall of the latter and the outer wall of by pass filter 8 create an oil flow path 15 for oil filtered by full flow filter 7, entered thereto via inlet opening 5 and oil passage 14 communicating with the inlet. The filtered oil in passage 15 finds the filter element 8 to be more resistive to flow than the otherwise restricting passage 18 of a venturi arrangement 29, communicating on the one hand with passage 15 and leading to outlet opening 6 of the filter device 1. The venturi arrangement 29 is in this embodiment composed of two generally conically shaped parts 19, 20, connected with end closure parts 12 and 4 respectively. The parts 19, 20 are oriented and aligned axially along axis A within the central chamber 16 of the micro-filter 8. It comprises a passage 18, in between these parts, which have their narrowest openings facing to one another. The passage 18 is in this embodiment circumferentially open towards the central chamber 16, but may however in principle as well be composed of a narrow tube with radial openings towards the chamber 16. In the represented embodiment, the distance between the ends of the venturi parts 19, 20 corresponds to or is smaller than the diameter of the opening of at least the smallest of both ends 19, 20. The diameter of the end of part 19, i.e. of the venturi part leading to opening 6 may be made slightly smaller than that of the opposing opening.

Figure 2 illustrates along a sectional view of a filter arrangement, an alternative embodiment for incorporating a micro filter element 8 in a main stream filtering arrangement. The presently shown embodiment is suited for replacing an existing full filter element within an existing housing, e.g. housing 21. To this end, according to the invention, a micro filter device is arranged solely within the housing of a full flow filter element as depicted this figure, fully replacing the conventional filter element.

In figure 2, an oil entrance 5 to a filter housing 21, leads to both an oil chamber 15 present between the housing 21 and the micro filter 8. The entrance is here situated at the same axial end as the oil outlet 6. It could however also have been situated at any other location communicating with space 15, e.g. radially, or at the other axial end. Via space 15 the oil inlet 5 also connects to a first conical part 24 of a venturi arrangement 29 largely corresponding to that of figure 1. In this embodiment the oil inlet communicates with a partly shown part 21 of a device such as a combustion engine or transmission casing part, with which the housing 21 is partly integrated. The housing 21 comprises an otherwise fully closed lid part 21 L, which in this example may be screwed to part 21 over threads 23. A sealing 35, in casu an O-ring is incorporated between an outer circumferential part of the lid part 21 L and the inner circumferential part of housing 21, i.e. at the mutually overlapping parts.

The venturi arrangement 29 in this embodiment consists of a further conical part 25, which forms a unit with first conical section 24 via a smallest passage 26 of the venturi which is here formed by a tube part 26 having openings 27 for communicating with the chamber 16 of the micro filter. The venturi arrangement 29 also forms an integral part with, or at least hooks up with an end closure element 31, preferably the one that is first inserted into the housing 21. At its other end, in casu near the oil inlet for the venturi arrangement 29, the latter is connected to another end closure element 31. In casu, conforming to the preference of the invention, this connection is formed via threads 32. Preferably, all of the end closure elements 30, 31 and the venturi device 29 are made of a synthetic material. The first conical part 24 is produced shorter than the second conical part 25, such that the latter has a larger amount of interior space. By this feature the oil stream passed through, and increased with oil from the chamber 16, may gradually expand towards oil outlet 6.

The end closure element 30 is positioned over a central notch 33 in which the oil outlet 6 is located. The element 30 and the notch 33, in fact the filter housing 21 are sealed from one another by a sealing means, in casu via an O-ring, accommodated in a groove 36 of the integrated closure part 30 and venturi arrangement 29. Apart from the advantage of having a high efficiency, fine grade filter combined within the location and functional requirements of a conventional filter, both embodiments come with the advantages of an axially oriented venturi device 29, utilising the otherwise not or only partly used interior of the micro-filter. Especially, for enabling such operation, the present invention surprisingly and favourably has utilised an existing, relatively large flow of oil for creating a significant pressure drop over the micro filter by the special and innovative use of a venturi device 29.

The invention, apart from the following claims, also relates to the preceding description and all details and aspects in the drawing which are directly and unambiguously derivable there from, at least by a man skilled in the art.

## Claims

1. Method enabling the use of a one way replacement micro filter as a replacement filter for a conventional, solely full flow filter, in particular suited for automotive application, the filter being composed of a filter material incorporated around a perforated central core (17) forming a mainly cylindrical central chamber (16), **characterised in that** the method comprises the steps of passing oil both along the periphery of the filter (8) within a filter housing (8), and through the interior of the central chamber (16) via a venturi device (29) dividing the central chamber (16) into a circumferential receiving section and a central flow-through section, the flow through section being shaped with to tapered sections (19, 20; 24, 25) having a smallest diameter part (18) between said sections, and a communication (27) being present between said sections with the circumferential section of the central chamber (16) of the micro filter(8).

2. Filter element (8), in particular suited for use in the method according to claim 1, for incorporation in a filter device located in an oil stream, in particular the main stream of a machine such as an engine or a transmission, the device comprising a housing (21, 21L) forming an oil chamber in which the filter is incorporated, an oil inlet opening (5) and an oil outlet opening (6), and the filter separating the housing (21, 21L) chamber into a chamber part (15) radial exterior to the filter, and a chamber part (16) radial interior to the filter (8), **characterised in that** communicating means are provided enabling the communication between the radial exterior chamber part (15) with the radial interior chamber part (16), towards a venturi arrangement (29) incorporated within the interior chamber (16) of the filter (8), the venturi arrangement being near its narrowest part being provided with an opening communicating with said interior chamber (16).

3. Filter element according to claim 2, **characterised in that** the venturi arrangement comprises two tapered sections (19, 20; 24, 25) having their tapered ends directed to one another.

4. Filer element according to any of the preceding element claims, **characterised in that** the tapered sections are incorporated in differing lengths of taper, preferably having the longest section communicating with the oil outlet (6).

5. Filter element according to any of the preceding element claims, **characterised in that** the filter is incorporated between end closure elements (4, 12; 30, 31), each of which is connected to, at least connectable with a respective tapered section of the venturi arrangement (29).

6. Filter element according to any of the preceding element claims, **characterised in that**, the respective tapered sections (19, 20; 24, 25) of the venturi arrangement (29) are mutually interconnected by a smallest internal diameter portion (26) of the arrangement (29).

7. Micro filter device, in particular according to any of the preceding claims, comprising end closure elements (30, 31) for closing the end faces of a micro filter element (8), **characterised in that** tensile means are provided for protruding through the central chamber (16) of the micro filter element (8), and interconnecting the end closure elements (30, 31) for tightening the in between to be incorporated micro filter element (8) between said end faces.

8. Holding device for a filter element, in particular as described in any of the preceding claims, **characterised in that** the device comprises closure elements (30, 31 ) for closing of the axial end faces of the filter element, the holding device comprising a tensile means (29) intended for protruding through the interior chamber (16) of such filter element (8).

9. Device according to the preceding claim **characterised in that** the tensile means is formed by a venturi arrangement as described in any of the preceding claims, comprising two conical, tapered setions.

10. Device according to the preceding claim, **characterised in that** the device is at least partly, but preferably entirely produced in a synthetic material, preferably comprises a section having a seal support (36) for sealed connecting to an outlet opening of a filter housing, and preferably being provided with end face closing elements (30, 31) having concentric profiled rings (34) for protruding into the filter end faces, through the feature of a largely triangular cross sectional, or at least relatively pointed or sharpened shape.
